# FASCICULE DE BREVET EUROPEEN

(11) **EP 2 158 414 B1**
(45) Date de publication et mention de la délivrance du brevet: **14.08.2019**
(21) Numéro de dépôt: 08805628.8
(22) Date de dépôt: 30.05.2008
(51) Int. Cl.: F16F 3/087, F16F 1/46, D07B 1/22

(54) **DISPOSITIF DE REGULATION DE LA DISTANCE COMPRISE ENTRE DEUX ELEMENTS DONT L'UN AU MOINS EST MOBILE, ET HARNAIS DE NATATION EN FAISANT APPLICATION**
VORRICHTUNG ZUR EINSTELLUNG DES ABSTANDS ZWISCHEN ZWEI GLIEDERN, VON DENEN MINDESTENS EINES BEWEGLICH IST, UND DIESE VERWENDENDER SCHWIMMGURT
DEVICE FOR ADJUSTING THE DISTANCE BETWEEN TWO MEMBERS AT LEAST ONE OF WHICH IS MOBILE, AND SWIMMING HARNESS USING SAME

(30) Priorité: 07.06.2007 FR 0704075
(43) Date de publication de la demande: 03.03.2010
(73) Titulaire: Mayaud, Christophe, 84700 Sorgues (FR)
(72) Inventeur: Mayaud, Christophe, 84700 Sorgues (FR)
(74) Mandataire: Weber, Etienne Nicolas
(86) Numéro de dépôt international: PCT/FR2008/000738
(87) Numéro de publication internationale: WO 2009/004170

(56) Documents cités:
- EP-A- 0 236 031
- DE-A1- 2 502 925
- DE-C- 728 446
- FR-A- 2 570 066
- US-A- 5 083 522
- US-A- 5 727 833

## Description

La présente invention concerne un dispositif de régulation de la distance comprise entre deux éléments dont l'un au moins est mobile. Ce dispositif est constitué par un lien élastique à capacité de résistance progressive exponentielle à l'allongement, en fonction de la force de traction appliquée à ce dernier. L'invention vise aussi un harnais de natation faisant application de ce dispositif.

Il est courant d'utiliser des câbles ou cordons élastiques constitués de plusieurs fils de caoutchouc juxtaposés sous gaine, pour des usages divers tels que, par exemple, fixation de colis ou bagages sur un support, lancement de planeurs, freinage d'avions à l'atterrissage, etc...

Les fils élastiques du faisceau constituant ces câbles ou cordons multibrins ont tous la même longueur et sont assujettis, à leurs extrémités opposées, à une boucle ou autre organe d'accrochage, de sorte que leur résistance à l'allongement est uniforme, jusqu'à l'approche de leur limite d'étirement.

Dans certaines applications, cette résistance à l'étirement uniforme constitue un inconvénient.

Un tel inconvénient se rencontre, notamment, lorsque le lien élastique est utilisé comme moyen de retenue d'un nageur pratiquant la natation dite « stationnaire », par exemple dans une piscine de petites dimensions (voir US- 5 083 522 et DE- 197 41 309). Dans cette situation, le nageur est équipé d'un harnais et il est relié à un bord de la piscine ou à un point fixe situé près de ce bord, au moyen d'un lien entièrement (DE- 197 41 309) ou partiellement (US- 5 083 522) élastique, permettant de le maintenir à distance du bord opposé de la piscine, par exemple dans la partie centrale ou sensiblement dans la partie centrale de cette dernière, de sorte qu'il peut nager sans changements incessants de direction, pendant la durée désirée.

Dans ce cas, l'inconvénient résultant de l'allongement uniforme des brins élastiques composant les sangles de retenue, ou la portion élastique de celles-ci, est que l'on est conduit à prévoir un jeu de plusieurs sangles présentant des capacités d'étirement différentes, afin que chaque nageur puisse choisir une sangle spécifique, adaptée à son âge, ou à son niveau de nage, ou à sa force physique, .... En effet, une sangle élastique présentant une faible capacité d'allongement élastique, c'est-à-dire, une forte résistance à l'étirement, ne permettra pas à un jeune nageur ou à un nageur débutant de se déplacer vers l'avant, de sorte que ce dernier n'éprouvera pas une sensation de nage normale, tandis qu'une sangle élastique présentant un degré d'étirement plus important, c'est-à-dire une faible résistance à l'allongement, ne permettra pas de maintenir un nageur de bon niveau dans la partie centrale de la piscine.

On connaît aussi (DE-25 02 925) des dispositifs d'absorption d'énergie applicables aux ceintures de sécurité de véhicules automobiles et constitués d'une pluralité de courroies élastiques de longueurs différentes fixées à deux points fixes de l'habitacle des véhicules. Ces dispositifs d'absorption d'énergie fonctionnent sur le principe d'un système présentant des caractéristiques d'allongement progressif en fonction des chocs, ils ne sont cependant pas conçus pour permettre de réguler une distance variable entre deux points.

La présente invention se propose d'apporter une solution simple et efficace au problème de la régulation de la distance comprise entre deux éléments dont l'un au moins est mobile et, en particulier aux inconvénients susmentionnés des harnais de natation comportant un lien élastique présentant une résistance à l'étirement uniforme.

Selon l'invention, cet objectif est atteint grâce à un lien élastique tel que défini par la revendication 1.
Des modes de mise en oeuvre particuliers de l'invention sont indiqués dans les revendications subséquentes 2 à 10.
L'invention concerne également un harnais de natation tel que défini par la revendication 11

Le lien élastique selon l'invention peut être constitué d'une pluralité de brins élastiques, de préférence recouverts d'un fourreau extensible, par exemple composé d'au moins une gaine tressée. Grâce à l'arrangement des brins élastiques le lien étirable se trouve doté d'une capacité de résistance progressive à l'étirement.

Selon un mode d'exécution très avantageux et facile à mettre en oeuvre, le lien extensible selon l'invention comprend au moins deux brins élastiques fixés, chacun, par l'intermédiaire de ses extrémités opposées, en deux points distants l'un de l'autre, d'une portion intermédiaire d'une sangle, comprise entre les portions extrêmes de cette dernière, dans des conditions telles que lorsqu'on exerce une force de traction sur ladite sangle, un premier brin élastique se trouve d'abord étiré, le deuxième brin élastique se trouvant ensuite étiré, en fonction de l'importance de la force de traction appliquée.

Selon un mode d'exécution préféré, le lien extensible selon l'invention comprend une pluralité de brins élastiques de longueur identique ou sensiblement identique fixés, chacun, par l'intermédiaire de ses extrémités opposées, en deux points distants l'un de l'autre, sur une portion intermédiaire d'une sangle, comprise entre les portions extrêmes de cette dernière, dans des conditions telles que lorsqu'on exerce une force de traction sur ladite sangle, un premier brin se trouve d'abord étiré, puis un deuxième, puis un troisième, et ainsi de suite, en fonction de l'importance de la force de traction appliquée.

Avantageusement, la sangle est réalisée dans une matière textile hydrophobe.

Selon un mode d'exécution avantageux, les différents brins élastiques sont fixés, par l'intermédiaire de leurs extrémités opposées, d'une part, en un emplacement commun de la sangle et, d'autre part, en des points espacés les uns des autres et différemment éloignés de leur point de fixation commun.

Selon un mode de réalisation intéressant, les brins élastiques sont groupés deux par deux, chaque paire de brins étant constituée par un lien élastique circulaire engagé dans deux passants espacés dont est munie ladite sangle.

Selon un mode d'exécution, les brins élastiques sont constitués sous forme de bandes plates.

Selon un autre mode d'exécution, les brins élastiques du faisceau élastique ont des longueurs identiques ou approximativement identiques.

Selon un autre mode d'exécution, les brins élastiques du faisceau élastique ont des caractéristiques identiques.

Grâce aux dispositions caractéristiques susmentionnées, on obtient un lien élastique présentant une résistance variable exponentielle à l'étirement, par exemple de 0 à 30 kgf, qui, dans l'application intéressante à la nage stationnaire, agit comme un amortisseur qui s'oppose progressivement à l'avancée du nageur et le retient sur une course limitée, quelle que soit la force développée, ce qui lui permet de rester dans la partie centrale de la piscine.

Bien entendu, ce lien élastique à capacité de résistance progressive à l'allongement peut trouver une grande variété d'applications intéressantes telles que par exemple :
- freinage d'avion à l'atterrissage ;
- pratique du benji ;
- liaison entre deux personnes en mouvement (pratique à deux du vélo, du roller, du ski ...) ;
- liaison entre un animal et une personne (laisse pour chien, harnais pour chien de traîneau ou attelage analogue) ;
- pratique de sports de rame en piscine (aviron, kayak, etc.) ;
- lien entre une personne et un objet (sangle d'attache d'une planche à un surfer, lien reliant un skieur nautique ou un nageur à un bateau) ;
- remorquage de véhicules ;
- stabilisation d'activités sportives dans l'espace (course ou marche sur place)
   etc.

Les buts, caractéristiques et avantages ci-dessus, et d'autres encore, ressortiront mieux de la description qui suit et des dessins annexés dans lesquels :
La figure 1 est une vue en perspective, avec arrachement partiel, d'un exemple d'exécution du lien élastique à capacité de résistance progressive à l'étirement selon l'invention.
La figure 2 est une vue en perspective d'un brin double ou brin circulaire constituant l'un des composants élastiques de ce lien.

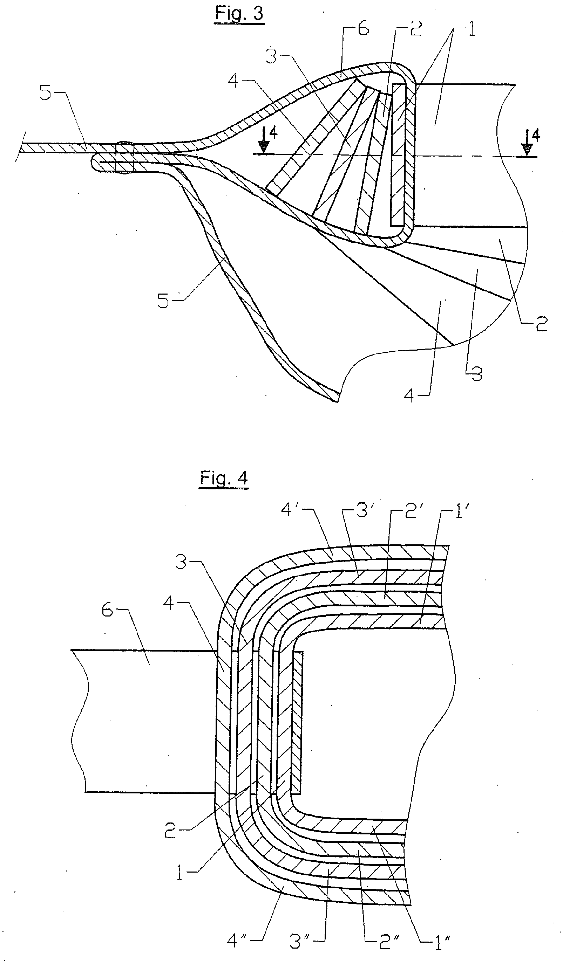

La figure 3 est une vue de détail, en coupe longitudinale et à échelle agrandie, montrant la fixation de l'ensemble des brins circulaires élastiques sur un passant commun de la sangle.
La figure 4 est une vue en coupe selon la ligne 4-4 de la figure 3.

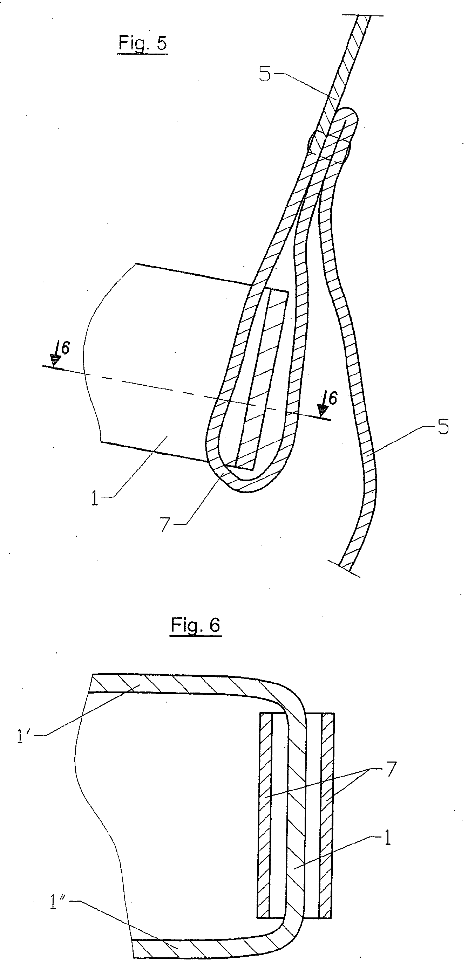

La figure 5 est une vue de détail, en coupe longitudinale, montrant la fixation individuelle de l'un des brins élastiques circulaires sur un passant distinct éloigné du passant commun de la sangle.
La figure 6 est une vue en coupe selon la ligne 6-6 de la figure 5.
La figure 7 est une vue de face montrant le lien en position tendue mais non étiré, le fourreau enveloppant l'ensemble des composants élastique du lien étirable n'étant pas représenté sur cette figure et les quatre figures suivantes pour la compréhension de l'invention.
Les figures 8 à 11 sont des vues analogues à la figure 7 montrant le lien élastique à différents stades d'étirement successifs.
La figure 12 est une vue en perspective illustrant une application très avantageuse de l'invention à un harnais de natation destiné à la pratique de la nage stationnaire.

On se reporte auxdits dessins pour décrire un exemple intéressant, bien que nullement limitatif, de mise en oeuvre du procédé et de réalisation du lien élastique à capacité de résistance progressive à l'allongement selon l'invention, ainsi qu'une application avantageuse de celle-ci.

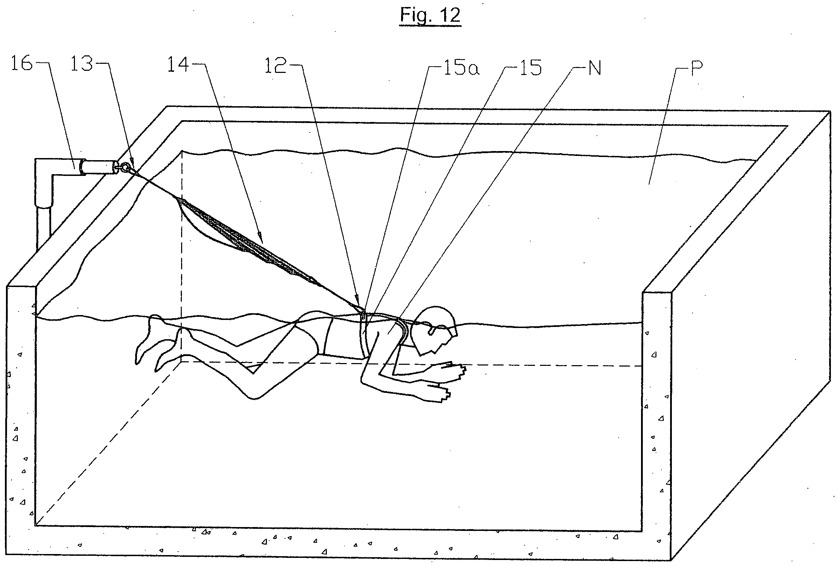

Le procédé de l'invention est principalement remarquable en ce que l'on relie deux points ou éléments 15, 16, séparés par une distance variable (figure 12), au moyen d'un lien élastique 14 constitué, au moins dans sa portion intermédiaire, d'au moins deux ou plus de deux brins élastiques arrangés de sorte que ledit lien élastique génère une résistance progressive à l'étirement, lorsque l'un desdits éléments (15) ainsi reliés est soumis à une force tendant à l'éloigner de l'autre (16).

Le lien élastique selon l'invention est constitué d'une pluralité de brins élastiques 1, 2, 3, 4,..., et il est principalement remarquable par un arrangement de ce faisceau de brins élastiques suivant lequel ledit lien étirable se trouve doté d'une capacité de résistance progressive à l'étirement.

Suivant un mode d'exécution très avantageux, le lien extensible selon l'invention comprend au moins deux brins élastiques 1, 2, 3, 4, ... fixés, chacun, par l'intermédiaire de ses extrémités opposées, en deux points distants l'un de l'autre, d'une portion intermédiaire d'une sangle, comprise entre les portions extrêmes de cette dernière, dans des conditions telles que lorsqu'on exerce une traction sur ladite sangle, un premier brin élastique 1 se trouve d'abord étiré, puis le deuxième brin élastique 2 se trouve ensuite allongé, en fonction de la force de traction appliquée.

Selon un mode d'exécution avantageux, les brins élastiques 1, 2, 3, 4,..., ont une longueur identique ou approximativement identique et sont fixés,chacun, par l'intermédiaire de ses extrémités opposées, en deux points distants l'un de l'autre 6-7, 6-8, 6-9, 6-10, ..., sur une portion intermédiaire 5a d'une sangle 5, comprise entre les portions extrêmes 5b, 5c de cette dernière, dans des conditions telles que lorsqu'on exerce une force de traction sur ladite sangle, un premier brin 1 se trouve d'abord étiré, puis un deuxième brin 2, puis un troisième brin 3, etc..., en fonction de la force de traction appliquée aux extrémités de ladite sangle.

Cette sangle 5 est, de préférence, non élastique. Elle est, par exemple, avantageusement constituée par une bande plate inextensible formée par des fils synthétiques tressés hydrophobes.

De manière avantageuse, les brins élastiques sont jumelés ou groupés deux à deux 1'-1", 2'-2", 3'-3", 4'-4",...., et chaque couple de brins 1, 2, 3, 4,...., est constitué par un lien élastique circulaire ou lien élastique sans fin.

Selon une importante disposition caractéristique de l'invention, les différents brins élastiques 1, 2, 3, 4,......, sont fixés, par l'intermédiaire de leurs extrémités opposées, d'une part, en un emplacement commun 6 de la sangle 5 et, d'autre part, en des points espacés les uns des autres 7, 8, 9, 10, de ladite sangle, et différemment éloignés de leur point de fixation commun 6.

De manière avantageuse, les emplacements de fixation 6, 7, 8, 9, 10,......, de la sangle 5 sont matérialisés par des passants dont est munie ladite sangle, sur une portion de sa longueur, chaque lien élastique circulaire 1, 2, 3, 4,......, étant engagé, d'une part dans un passant commun 6 et, d'autre part, individuellement, dans l'un des passants espacés les uns des autres 7, 8, 9, 10 et disposés à des distances différentes dudit passant commun 6.

En d'autres termes, les boucles élastiques 1, 2, 3, 4,....., sont rattachées à la sangle 5 par l'intermédiaire du même passant 6, et donc en un même emplacement de ladite sangle, tandis qu'à l'opposé, les points d'attache individuels desdites boucles élastiques sont distincts et se succèdent le long de la sangle.

Selon l'exemple illustré, les écarts successifs entre les points d'attache individuels 7, 8, 9, 10,......, des liens élastiques circulaires 1, 2, 3, 4,...., évoluent le long de la sangle 5, en augmentant au fur et à mesure que l'on se rapproche de l'extrémité de ladite sangle 5.

Selon une autre disposition caractéristique, les brins élastiques 1, 2, 3, 4,..., constituant le faisceau élastique, ont des longueurs identiques ou approximativement identiques.

De manière avantageuse, les brins élastiques 1, 2, 3, 4,......., sont constitués par des bandes plates de matière élastique, par exemple par des bandes plates de caoutchouc naturel ou synthétique.

D'autre part, de manière très intéressante, ils présentent des caractéristiques identiques (matière, longueur, largeur ou diamètre,......) ce qui facilite la fabrication et influe favorablement sur le prix de revient.

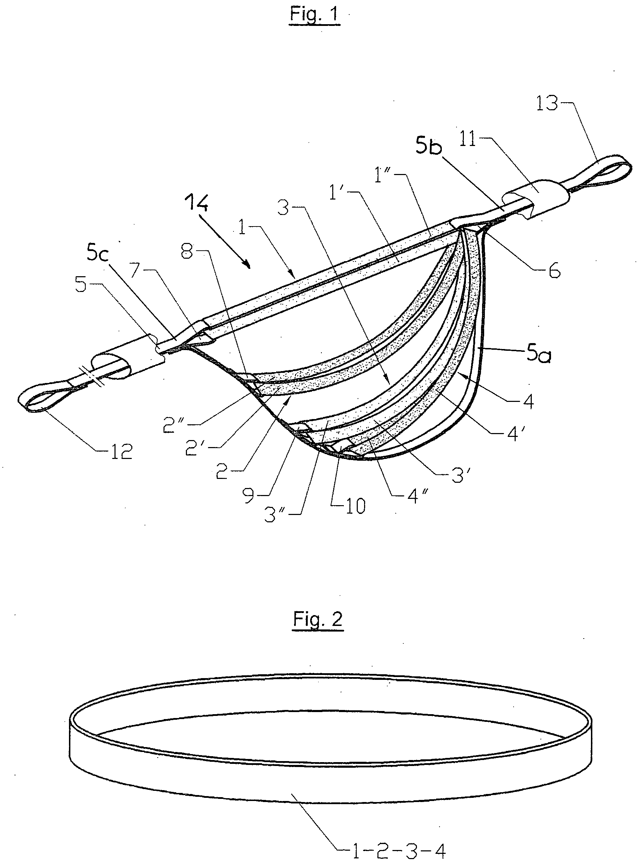

De préférence, le faisceau élastique 1, 2, 3, 4 est logé dans un fourreau ou gaine souple qui peut être avantageusement constituée par une gaine extensible 11, partiellement représentée à la figure 1 et, par exemple, constituée par une tresse tubulaire de fils synthétiques hydrophobes.

Les extrémités opposées de la sangle 5 sont munies de moyens d'attache 12 et 13 permettant de la fixer à deux points distants que l'on souhaite relier élastiquement, avec une possibilité de résistance progressive à l'étirement.

Par exemple, dans l'application plus spécialement envisagée aux équipements destinés à la pratique de la nage stationnaire, l'une des extrémités de la sangle 5 peut être munie d'un passant ou boucle 12 permettant sa fixation avec une possibilité de glissement ou non sur un élément d'un harnais corporel, tandis que l'autre extrémité de ladite sangle peut être munie d'une boucle 13 ou autre dispositif d'attache permettant, par exemple, sa fixation à un élément fixe situé en bordure d'une piscine ou à un mât disposé fixement à l'extérieur et à proximité de ladite bordure.

On comprend bien le fonctionnement du lien ou sangle élastique à capacité de résistance variable à l'allongement décrit ci-dessus.

En utilisation, dans les cas de l'application avantageuse à la pratique de la nage stationnaire, ce lien désigné dans son ensemble par la référence 14 à la figure 12, est attaché, d'une part, par l'une de ses extrémités munie du passant ou boucle 12 à un élément 15a d'un harnais 15 porté par un nageur N évoluant dans une piscine P, et, d'autre part, par son extrémité opposée 13 à un élément d'amarrage constitué par un mât fixe 16 disposé à l'extérieur et à proximité de l'un des bords transversaux de la piscine.

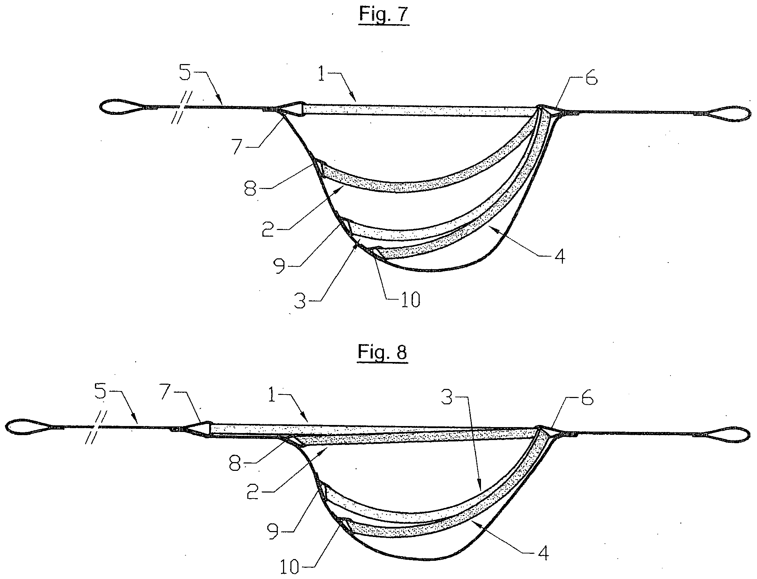

La figure 7 illustre une situation initiale suivant laquelle le brin élastique 1 dont le point de fixation individuel 7 est le plus éloigné du point de fixation commun 6 est tendu mais non étiré, tandis que les autres brins 2, 3, 4,...., sont non tendus et « flottants ».

Lorsqu'on applique une force de traction T1 de faible valeur (par exemple de 0 à 6 Kgf), au lien élastique selon l'invention, on obtient d'abord un étirement du brin élastique 1 sur une longueur réduite (par exemple de l'ordre de 0 à 40 cm), tandis que le brin élastique 2 rattaché au point de fixation individuel suivant 8 se trouve tendu mais non étiré et que les autres brins élastiques 3 et 4 restent non tendus et « flottants » (figure 8).

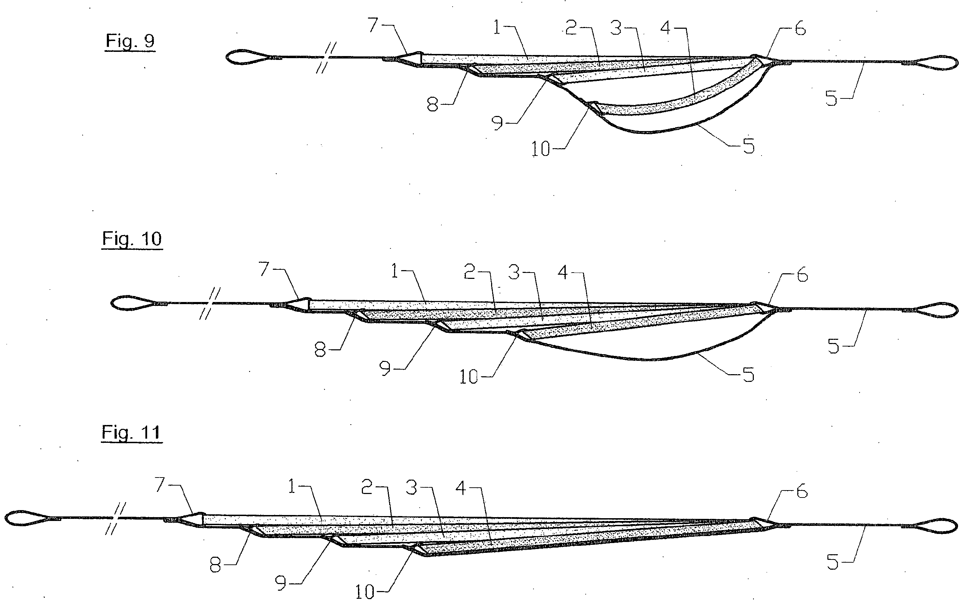

Lorsque la force de traction est augmentée jusqu'à une valeur plus importante T2 déterminée (par exemple de 6 à 13 Kgf), le brin élastique 2 est étiré en même temps que le brin élastique 1, de sorte que le lien élastique 14 se trouve également étiré sur une longueur supplémentaire (par exemple de l'ordre de 0 à 40 cm), tandis que le brin élastique 3 rattaché au point de fixation suivant 9 est tendu mais non étiré et que l'autre brin élastique 4 reste non tendu et « flottant » (figure 9). Dans ce cas, la valeur de l'allongement du lien élastique 14 correspond à la valeur de l'allongement total du brin élastique 1 (par exemple de l'ordre de 40 à 60 cm).

Lorsqu'on applique une force de traction T3 encore plus importante (par exemple de 13 à 27 Kgf) au lien élastique 14, les brins élastiques 1 et 2 sont étirés sur une longueur supplémentaire (par exemple de l'ordre de 0 à 30 cm), tandis que le brin élastique 3 est étiré sur une même longueur et que le brin élastique 4 est tendu mais non étiré (figure 10). Dans ce cas, la valeur de l'allongement du lien élastique 14 correspond à la valeur de l'étirement total du brin élastique 1 (par exemple de l'ordre de 40 à 90 cm).

Et ainsi de suite, jusqu'à étirement du brin élastique dont le point de fixation individuel est le plus proche du point de fixation commun 6 (point de fixation 10 du brin élastique 4, selon l'exemple illustré à la figure 11).

La figure 11 montre un état d'allongement du lien élastique 14 suivant lequel tous les brins élastiques 1, 2, 3, 4 sont étirés, cet allongement correspondant à la valeur de l'étirement total du brin élastique 1 dont le point de fixation individuel 7 est le plus éloigné du point de fixation commun 6. Dans cette situation d'allongement maximum, la sangle 5 est elle-même tendue et s'oppose à tout étirement supplémentaire indésirable des brins élastiques.

Les avantages obtenus sont un allongement bien moindre pour une même puissance, ce qui permet, dans l'application du lien élastique à la nage stationnaire, de retenir le nageur sur une courte distance (par exemple de l'ordre de 80 cm), de façon à le maintenir au centre du bassin qui peut ainsi avoir des dimensions réduites, et une souplesse d'utilisation beaucoup plus grande, ce qui permet au nageur de ne pas se sentir « attaché », la réponse du lien élastique étant proportionnelle à son effort et non pas fixe ou linéaire.

L'invention concerne également un harnais de natation pour la pratique de la nage stationnaire. Ce harnais comprend principalement un harnais proprement dit constitué d'un dispositif de sangles destiné à être positionné autour du corps d'un nageur, et un lien élastique 14 fixé, par l'intermédiaire de l'une de ses extrémités 13, de manière détachable ou non, à un élément 15a dudit harnais, et dont l'autre extrémité 12 est conformée pour pouvoir être rattachée, de manière amovible ou non à un élément d'amarrage fixe 16. Le harnais de natation selon l'invention est remarquable en ce que ledit lien élastique 14 est constitué d'au moins deux ou plus de deux brins élastiques 1, 2, 3, 4, ..., arrangés de sorte que ledit lien élastique se trouve doté d'une capacité de résistance progressive à l'allongement, ce lien élastique comportant une ou plusieurs des caractéristiques précédemment décrites.

## Revendications

1. Lien élastique doté d'une capacité de résistance progressive à l'étirement et comprenant au moins deux brins élastiques (1, 2, 3, 4...), chacun desdits brins étant fixé par l'intermédiaire de ses extrémités opposées, en deux points (6-7 ; 6-8 ; 6-9 ; 6-10) distants l'un de l'autre, d'une sangle (5), **caractérisé en ce que** les brins élastiques (1, 2, 3, 4, ....) sont fixés, d'une part, en un point de fixation commun (6) de la sangle (5) et, d'autre part, en des points espacés les uns des autres (7, 8, 9, 10) et différemment éloignés du point de fixation (6) commun sur une portion intermédiaire (5a) de la sangle (5) comprise entre des portions extrêmes (5b, 5c) de cette dernière.

2. Lien élastique selon la revendication 1, **caractérisé en ce qu'**il comprend plus de deux brins élastiques (1, 2, 3, 4,...).

3. Lien élastique selon l'une quelconque des revendications 1 ou 2, **caractérisé en ce que** les brins élastiques (1, 2, 3, 4,...,) sont jumelés ou groupés deux à deux (1'-1",2'-2", 3'-3", 4'-4",..), chaque paire de brins étant constituée par un lien élastique circulaire engagés dans deux passants espacés (6-7, 6-8, 6-9, 6-10) dont est munie la sangle (5) sur une portion de sa longueur.

4. Lien élastique suivant l'une quelconque des revendications 1 à 3, **caractérisé en ce que** la sangle (5) est inextensible ;

5. Lien élastique selon l'une quelconque des revendications 1 à 4, **caractérisé en ce que** la sangle (5) est réalisée dans une matière textile hydrophobe.

6. Lien élastique selon l'une quelconque des revendications 1 à 5, **caractérisé en ce que** les brins élastiques (1, 2, 3, 4,...) du faisceau élastique ont des longueurs identiques ou approximativement identiques.

7. Lien élastique suivant l'une quelconque des revendications 1 à 6, **caractérisé en ce que** les brins élastiques (1, 2, 3, 4,...) du faisceau élastique ont des caractéristiques identiques.

8. Lien élastique selon l'une quelconque des revendications 1 à 7, **caractérisé en ce que** les brins élastiques (1, 2, 3, 4,...) sont constitués par des bandes plates.

9. Lien élastique selon l'une quelconque des revendications 1 à 8, **caractérisé en ce que** les brins élastiques sont recouverts d'une gaine souple (11).

10. Lien élastique suivant la revendication 9, **caractérisé en ce que** la gaine souple (11) est extensible.

11. Harnais de natation, en particulier pour la pratique de la nage stationnaire, comprenant, d'une part, un dispositif de sangles (15) destiné à être ajusté autour du corps d'un nageur, et, d'autre part, un lien élastique (14) dont l'une des extrémités (12) est fixée ou agencée pour pouvoir être fixée à un élément (15a) dudit dispositif (15) et dont l'autre extrémité (13) est fixée ou conformée pour être fixée à un élément d'amarrage fixe (16), **caractérisé en ce que** ledit lien élastique (14) est réalisé selon l'une quelconque des revendications 1 à 10.

## Patentansprüche

1. Elastisches Band, das eine Kapazität zum allmählichen Widerstehen gegen Dehnen besitzt und mindestens zwei elastische Glieder (1, 2, 3, 4...) umfasst, wobei jedes der Glieder mittels seiner entgegengesetzten Enden an zwei Stellen (6-7; 6-8; 6-9; 6-10), die voneinander beabstandet sind, eines Gurts (5) befestigt ist, **dadurch gekennzeichnet, dass** die elastischen Glieder (1, 2, 3, 4,...) einerseits an einer gemeinsamen Befestigungsstelle (6) des Gurts (5) befestigt sind und andererseits an Stellen (7, 8, 9, 10), die voneinander beabstandet und unterschiedlich von der gemeinsamen Befestigungsstelle (6) auf einem Zwischenabschnitt (5a) des Gurts (5), der zwischen Endabschnitten (5b, 5c) dieses Letzteren liegt, entfernt sind.

2. Elastisches Band nach Anspruch 1, **dadurch gekennzeichnet, dass** es mehr als zwei elastische Glieder (1, 2, 3, 4,...) umfasst.

3. Elastisches Band nach einem der Ansprüche 1 oder 2, **dadurch gekennzeichnet, dass** die elastischen Glieder (1, 2, 3, 4,...,) zu je zwei (1'-1", 2'-2", 3'-3", 4'-4",...) gepaart oder gruppiert sind, wobei jedes Paar von Gliedern aus einem kreisförmigen elastischen Band besteht, das in zwei beabstandete Schlaufen (6-7, 6-8, 6-9, 6-10), mit welchen der Gurt (5) auf einem Abschnitt seiner Länge versehen ist, eingefügt sind.

4. Elastisches Band nach einem der Ansprüche 1 bis 3, **dadurch gekennzeichnet, dass** der Gurt (5) nicht dehnbar ist.

5. Elastisches Band nach einem der Ansprüche 1 bis 4, **dadurch gekennzeichnet, dass** der Gurt (5) aus einem Wasser abstoßenden Textilmaterial hergestellt ist.

6. Elastisches Band nach einem der Ansprüche 1 bis 5, **dadurch gekennzeichnet, dass** die elastischen Glieder (1, 2, 3, 4,...) des elastischen Bündels identische oder in etwa identische Längen aufweisen.

7. Elastisches Band nach einem der Ansprüche 1 bis 6, **dadurch gekennzeichnet, dass** die elastischen Glieder (1, 2, 3, 4,...) des elastischen Bündels identische Merkmale aufweisen.

8. Elastisches Band nach einem der Ansprüche 1 bis 7, **dadurch gekennzeichnet, dass** die elastischen Glieder (1, 2, 3, 4,...) aus flachen Streifen bestehen.

9. Elastisches Band nach einem der Ansprüche 1 bis 8, **dadurch gekennzeichnet, dass** die elastischen Glieder mit einer biegsamen Hülse (11) abgedeckt sind.

10. Elastisches Band nach Anspruch 9, **dadurch gekennzeichnet, dass** die biegsame Hülse (11) dehnbar ist.

11. Schwimmgurt, insbesondere für das Ausüben von stationärem Schwimmen, der einerseits eine Vorrichtung aus Gurten (15) umfasst, die dazu bestimmt ist, um den Körper eines Schwimmers angepasst zu werden, und, andererseits, ein elastisches Band (14) von welchem eines der Enden (12) befestigt oder eingerichtet ist, um an einem Element (15a) der Vorrichtung (15) befestigt werden zu können, und dessen anderes Ende (13) befestigt oder ausgestaltet ist, um an einem fixen Andockelement (16) befestigt zu sein, **dadurch gekennzeichnet, dass** das elastische Band (14) nach einem der Ansprüche 1 bis 10 hergestellt ist.

## Claims

1. Elastic link provided with a progressive resistivity to stretching and comprising at least two elastic strands (1, 2, 3, 4...), each of said strands being fastened by means of the opposite ends thereof, at two mutually distant points (6-7; 6-8; 6-9; 6-10), of a strap (5), **characterised in that** the elastic strands (1, 2, 3, 4, ...) are fastened, on one hand, at a common fastening point (6) of the strap (5) and, on the other, at mutually spaced points (7, 8, 9, 10) at different distances from the common fastening point (6) on an intermediate portion (5a) of the strap (5) between end portions (5b, 5c) thereof.

2. Elastic link according to claim 1, **characterised in that** it comprises more than two elastic strands (1, 2, 3, 4,...).

3. Elastic link according to any one of claims 1 or 2, **characterised in that** the elastic strands (1, 2, 3, 4,...,) are paired or grouped two by two (1'-1", 2'-2", 3'-3", 4'-4",...), each pair of strands consisting of a circular elastic link fitted in two spaced sleeves (6-7, 6-8, 6-9, 6-10) with which the strap (5) is equipped over a portion of the length thereof.

4. Elastic link according to any one of claims 1 to 3, **characterised in that** the strap (5) is non-extensible.

5. Elastic link according to any one of claims 1 to 4, **characterised in that** the strap (5) is made of a water-repellent textile material.

6. Elastic link according to any one of claims 1 to 5, **characterised in that** the elastic strands (1, 2, 3, 4,...) of the elastic bundle have identical or approximately identical lengths.

7. Elastic link according to any one of claims 1 to 6, **characterised in that** the elastic strands (1, 2, 3, 4,...) of the elastic bundle have identical characteristics.

8. Elastic link according to any one of claims 1 to 7, **characterised in that** the elastic strands (1, 2, 3, 4,...) consist of flat strips.

9. Elastic link according to any one of claims 1 to 8, **characterised in that** the elastic strands are covered with a flexible sheath (11).

10. Elastic link according to claim 9, **characterised in that** the flexible sheath (11) is extensible.

11. Swimming harness, in particular for in-place swimming, comprising, on one hand, a strap apparatus (15) intended to be fitted around a swimmer's body and, on the other, an elastic link (14) wherein one of the ends (12) is fastened or arranged to be fastened to an element (15a) of said apparatus (15) and wherein the other end (13) is fastened or configured to be fastened to a fixed mooring element (16), **characterised in that** said elastic link (14) is embodied according to any one of claims 1 to 10.
